# EUROPEAN PATENT SPECIFICATION

(11) **EP 3 931 440 B1**
(45) Date of publication and mention of the grant of the patent: **15.07.2026**
(21) Application number: 20713105.3
(22) Date of filing: 25.02.2020
(51) Int. Cl.: F03D 3/02, F03D 9/32, F03D 3/00

(54) **WINDMILL TURBINE ARRANGED HORIZONTALLY IN A FLAT RACK CONTAINER-LIKE STRUCTURE FOR SHIPS**
HORIZONTAL IN EINER FLAT-RACK-CONTAINER-STRUKTUR ANGEORDNETE WINDRADTURBINE FÜR SCHIFFE
TURBINE ÉOLIENNE DISPOSÉE HORIZONTALEMENT DANS UNE STRUCTURE DU TYPE CONTENEUR À RÂTELIER PLAT POUR NAVIRES

(30) Priority: 25.02.2019 IS 50254
(43) Date of publication of application: 05.01.2022
(73) Proprietor: Svavarsson, Oskar, IS-112 Reykjavik (IS)
(72) Inventor: Svavarsson, Oskar, IS-112 Reykjavik (IS)
(74) Representative: Arnason Faktor
(86) International application number: PCT/IS2020/050005
(87) International publication number: WO 2020/174501

(56) References cited:
- EP-A2- 2 098 722
- WO-A1-2006/123951
- WO-A1-2016/111617
- FR-A1- 2 930 302
- GB-A- 2 444 557

## Description

### FIELD OF THE INVENTION

The present invention relates to the field of wind turbine systems for harvesting wind energy to produce electric power. More particularly, a vertical wind turbine system is placed horizontally in a flat rack container-like structure which can suitably be located as the top layer on container vessels.

### GENERAL BACKGROUND AND PRIOR ART

The shipping industry is looking into how it can reduce its share of global greenhouse gas emissions in line with the Paris Agreement. If the sector is to meet the decarbonization challenge, then there is need to build new vessels emitting less then present vessels and to retro-fit the existing ships to significantly reduce their CO2 emissions.

WO 2016/111617 discloses a windmill structure comprising a vertically arranged windmill blade in a container-based structure, intended as a stand-alone electric power station. The structure comprises a vertical axis wind turbine (VAWT) and duct defining elements comprising air constriction members and also solar panels (photovoltaic system).

EP 2098722 discloses a wind power plant comprising a horizontal wind turbine mounted on board a vessel where a structure comprising a plurality of stacked rotor blades is proposed.

WO2006/123951 A1 discloses another prior art example of a windmill structure comprising a horizontal arranged axis.

### SUMMARY OF THE INVENTION

The present invention can help the shipping industry, especially container vessels, to reduce emissions. This invention would help the container vessel industry to lower its emissions fast without needing to make drastic changes to existing fleets in the near future. The windmills of the present invention ca be loaded as the top layer of a container vessel, in similar sized and shaped structures as conventional containers. Accordingly, the wind turbine system of the invention is arranged horizontally in a flat rack container-like structure. This way, the windmills can both harness the air streams that press up each side of the ship when it is sailing and also harness all other wind that passes by. It will not matter where the wind comes from, the windmills will always rotate. This invention can be readily transported and easily mounted at any desired location on the ship. The windmills of the invention can further be used on land as well, such as but not limited to remote locations where it is difficult to make foundations for a conventional windmill tower or where electricity is temporarily needed.

In a first aspect, the invention sets forth a windmill structure as defined in claim 1. The windmill structure comprises at least one windmill blade arranged on a stationary horizontally arranged axis, an elongated frame with the general shape of a rectangular prism, the axis arranged centrally and along the long dimension of the frame, the frame defining a windmill house surrounding said at least one windmill blade, the windmill house having at least two oppositely arranged side openings on the long sides of the house. The top plane of the windmill house can comprise a top surface panel and can in some embodiments also have an opening, which can be a part of the top or substantially all of the top. In some useful embodiments at least one of the oppositely arranged side openings is closeable, such as by moveable panels, a sliding door structure, one or more tarpoulin which in some embodiments can be rolled up, or the like.

In some embodiments the windmill structure comprises a generator connected to the windmill axis. The generator can be arranged within the frame structure, distally connected to one end of the rotating main axis. The windmill structure can comprise a gearbox connecting the generator and axis. In some embodiments the generator is a permanent magnet generator, such generator is as such well known in the art and can advantageously be connected directly to the rotating axis. In typical use on a vessel, after loading the container vessel, the wind turbines, each in a respective container structure, are loaded as the top layer of the cargo. The container structures can then be interconnected and then optionally connected to a hybrid engine that helps the main engine of the ship. It is also possible with this invention to produce hydrogen to store for later use or to charge battery packs. In some embodiments solar panels are arranged on top of each container structure to also harvest energy from the sun.

In some embodiments the windmill structures are positioned on floating docks, barges or vessels not in use for regular transport (e.g. discontinued freight vessels), and placed in a permanent location such as out of the coast, providing a floating electricity power plant.

The windmills of the present invention can be referred to as vertical windmills, as they correspond to certain degree structurally to conventional vertical axis wind turbines (VAWT) for land use, i.e. windmills with blades arranged on a vertically rotating main axis. In the present invention, however, the main axis of the windmill is arranged horizontally, so in effect the windmill is not "vertical" in a geometric sense, but can be referred to as a horizontally arranged "vertical windmill". In the present text, when a "vertical" windmill of the invention is being referred to, what is meant is a horizontally arranged "vertical" windmill. Thus, the windmill of the present invention has many features in common with vertical windmills for land-use, including that the main axis of rotation is stationary, as is the electrical generator.

The windmills of the present invention are suitably loaded as the top layer of a container vessel in similar shaped and sized container-like structures as cargo containers. The wind turbine system of the invention which is placed horizontally in flat rack container structure is first and foremost harnessing the wind that presses up each side of the ship when it is cruising but also harnesses other wind that passes by. This invention can be readily transported and easily mounted at any desired location on a ship because the same mechanism is used to load the windmill structures as other conventional containers of a container vessel. In some embodiments the windmill structures are loaded one of top of another, forming two or more levels of windmills. In such embodiments some windmill structures can be configured without its own generator but instead connected to a generator on an adjacent windmill structure, such as a windmill structure above or below the first mentioned structure. In such generator-free structure the windmill and rotating axis can extend along substantially all of the structure. In these embodiments the stacked windmill can be connected by a suitable force transmission mechanism, a chain or the like, connecting the top or bottom axis to the axis and/or generator of the other windmill in the joined pair.

The container structure comprises a rigid frame with the general shape of a rectangular prism (i.e. regular "box shape") that generally define the container-sized outlines of the structure. Thus, in preferred embodiments the size of the frame and windmill house corresponds to a conventional 20 or 40-foot freight container. The rotational axis of the turbine is arranged horizontally and centrally along the length of the structure. The axis is held on one end within a bearing and the other end is preferably connected to a generator. The generator is generally stationary, arranged in one end of the container structure. The structure comprises one or more central bearing held by a centrally arranged support for supporting a central point of the axis. The central bearing can, e.g., be held by diagonally arranged members extending from the top and bottom bars of the sides, or by a centrally arranged plate orthogonal to the turbine axis. It follows that in these embodiments the windmill blade is split in at least two parts to accommodate rotation of the blade on each side of the central bearing.

The frame defines a windmill house surrounding the at least one windmill blade of the windmill. The house has at least two oppositely arranged side openings on the length sides of the house. These openings may comprise essentially all the main surfaces of the sides of the frame, typically excepting the part of the frame that contains the generator. Thus, the frame can be described as comprising on the one hand a house for surounding the windmill blade ("windmill house"), and an adjacent generator house, which is typically closed.

In some embodiments also the top end of the house has an opening, which may comprise up to substantially all of the surface of the windmill house.

The at least one windmill blade size and shape is constrained by the dimensions of the frame and windmill house but can otherwise have any known suitable shape such as in particular known and tested shapes of conventional vertical wind turbine blades. In one embodiment, the at least one windmill blade is a helical type blade, which term refers to herein that the blade has at least a partially helical shape, around the axis. In some embodiments the windmill comprises at least two, such as three helical type blades or four helical type blades. In another embodiment so-called Savonius type blades are used, which are scoop-shaped blades, well known to the skilled person. There are typically two such blades in the windmill but can also be three. In another embodiment so-called Darrieus blade is used. It follows that in some embodiments the blades themselves are attached directly to the rotating axis, whereas in other embodiments blades are used that comprise winglets arranged distally away from the axis and attached to the axis via extension arms.

### BRIEF DECRIPTION OF THE DRAWINGS

FIG. 1 is a side view of a embodiment of a wind turbine in a flat rack container structure.
FIG. 2 is a view of a second embodiment of a wind turbine in a flat rack container structure with closed top and controlled open/closed sides when necessary in bad weather condition.
FIG. 3 is a side view of an embodiment of a wind turbine in a flat rack container structure with one or more solar panel on top and controlled open/closed sides when necessary to close in bad weather condition.
FIG. 4 is a side view where the turbine blade is split in the middle to accommodate for a central support supporting the center of the turbine axis.
FIG. 5 shows an embodiment where two container-like frame structures each containing a windmill are joined one on top of the other.
FIG. 6 is a front view of a container ship to show how the wind turbines harness the air pressure from each side of the ship when it is sailing.
FIG. 7 is a top view of container ship from above to show where the windturbines container structures can be located.

### DETAILED DESCRIPTION OF EMBODIMENTS

A detailed description of particular embodiments of the present invention will be made with reference to the accompanying drawings.

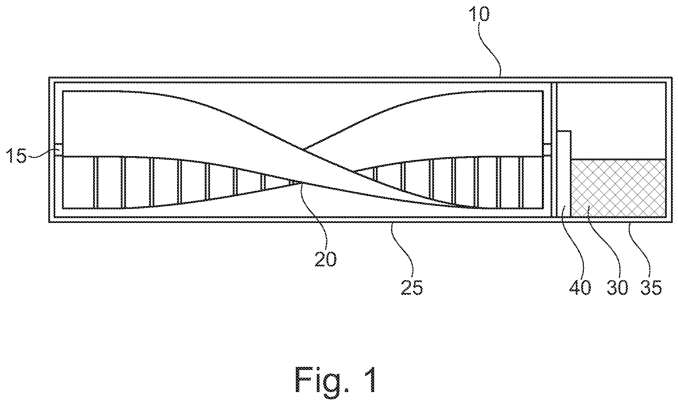

Referring to FIG 1, a first embodiment of the windmill structure includes a flat rack container structure 10, a vertical windmill turbine 20 arranged horizontally and rotating around an axis 15, the axis is connected to a generator 30, optionally via an optional gearbox 40. In this embodiment the container structure 10 comprises a windmill house 25 and a generator house 35.

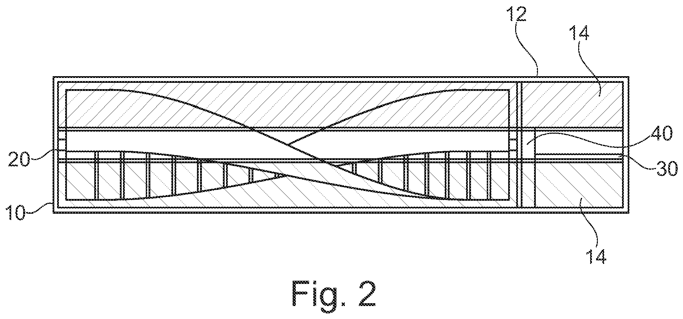

Referring to FIG 2, this embodiment includes flat rack container structure 10, vertical windmill turbine 20 placed horizontally with generator 30 and a gearbox 40. In this embodiment the container structure also includes a closed top 12 and controlled open/closed sides 14, e.g. for closing off the windmill house for bad weather conditions.

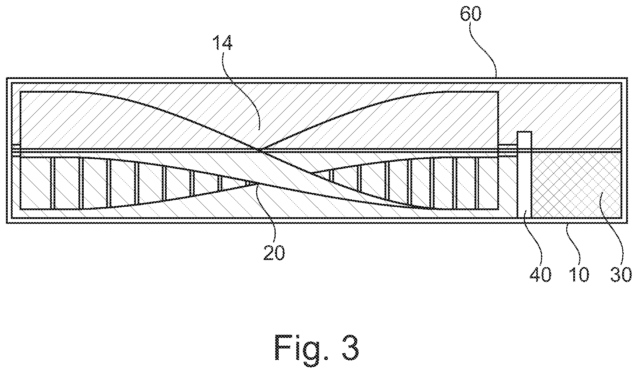

Referring to FIG 3, a third embodiment shows flat rack container structure 10, vertical windmill turbine 20 placed horizontally with generator 30 and a gearbox 40. This embodiment windmill structure also includes one or more solar panel 60 on top and controlled open/closed sides 14, such as for bad weather conditions.

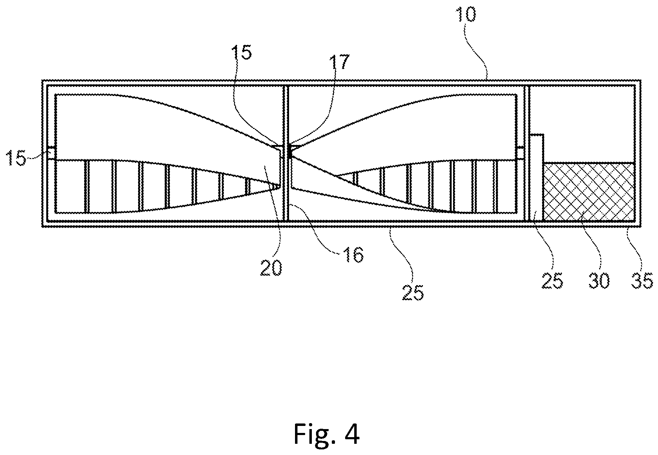

FIG. 4 shows an embodiment where at least one central support member 16 is arranged in the frame for providing additional support to the axis 15, substantially at a middle point of the axis. The central support member 16 can comprise a plate with a hole and bearing 17 in the middle, in another embodiment the central support member comprises diagonal bars with ends attached to the frame bars that run parallel to the axis, the diagonal bars having at their intersection a hole with a bearing, for supporting the axis. In these embodiments the rotor blade is split in the middle to accommodate the central support member allowing the rotor to freely rotate.

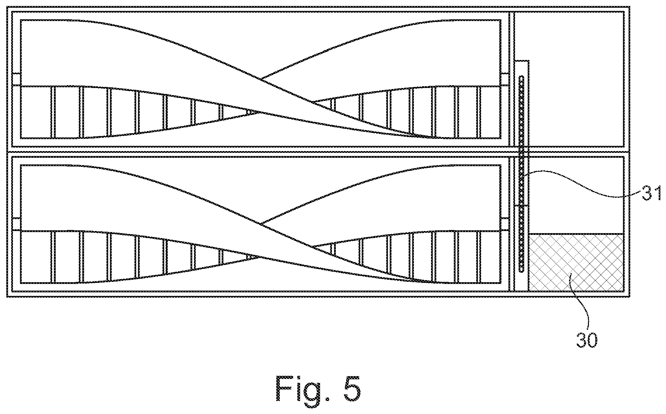

FIG. 5 shows an embodiment with two windmill stuctures connected, one of top of the other. A transmission mechanism 31 is arranged to connect the axis of the top turbine with the axis and/or generator 30 of the lower tubine structure.

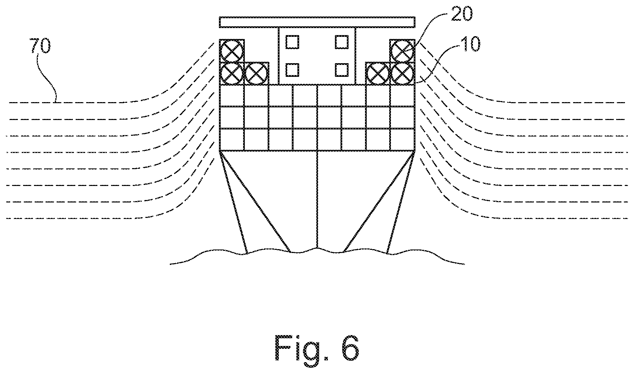

FIG. 6 is a front view of container vessel with a plurality of side-by-side arranged windturbines 20 in container structures 10 to show how the wind turbines harness the air stream 70 from each side of the ship when it is sailing.

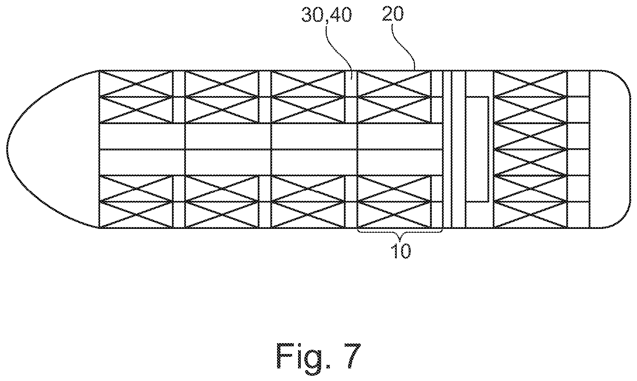

FIG. 7 is a top view of a container ship as seen from above to show where the wind turbines 20 with genarator 30 and gearbox 40 in flat rack container structures 10 can be located.

The container structures can then be interconnected and the power is suitably used to help the main machine of the vessel.

Although the present invention has been described with reference to the foregoing preferred embodiments, it will be understood that the invention is not limited to the details thereof. Various equivalent variations and modifications can still occur to those skilled in this art in view of the teachings of the present invention. Thus, all such variations and equivalent modifications are also embraced within the scope of the invention as difined in the appended claims.

## Claims

1. A windmill structure comprising
- at least one windmill blade (20) arranged on a stationary horizontally arranged axis (15),
- an elongated frame (10) with the axis (15) of the windmill blade (20) arranged centrally and along the long dimension of the frame (10), the frame defining a windmill house (25) surrounding said at least one windmill blade (20),
- said house (25) having at least two oppositely arranged side openings on the long sides of the house
**characterised by**
the elongated frame having the general shape of a rectangular prism with dimensions substantially corresponding to a cargo container for container vessels, and by
- one or more central bearing (17) held by a centrally arranged support (16) for supporting a central point of the axis (15).

2. The windmill structure according to claim 1, comprising an opening on the top of said house (25).

3. The windmill structure according to claim 1 or 2, wherein at least one of said oppositely arranged openings on the length sides is closable.

4. The windmill structure according to any of the preceding claims wherein said at least two oppositely arranged openings cover substantially the whole respective sides of said windmill house (25).

5. The windmill structure according to any of the preceding claims, wherein said at least one windmill blade (20) comprises at least one helical type blade.

6. The windmill structure according to any of claims 1 to 4, wherein said axis (15) has at least one end that is connectable to a generator (30) and/or movement transfer mechanism for connecting to a generator (30).

7. The windmill structure according to any of claims 1 to 5, wherein said axis (15) is connected to an electric generator (30) that generates electricity from rotation of the axis (15), said electric generator optionally being comprised in a distal section of the windmill house (25).

8. The windmill structure according to claim 7, wherein said electric generator (30) is a permanent magnet generator.

9. The windmill structure according to claim 7 or 8, wherein said axis (15) is connected to said electric generator via an adjustable gear mechanism (40).

10. A first windmill structure according to any of claims 6 to 9, comprising a movement transfer mechanism (31) for connecting its axis (15) to an electric generator (30) of an adjacent second windmill structure above or below.

11. The windmill structure according to any of claims 1-9, further comprising a solar panel (60) arranged on the top of said frame (10).

12. The windmill structure according to claim 1, wherein said windmill blade (20) comprises at least one Savonius-type windmill blade.

13. A method of providing power to a vessel comprising arranging on the deck of said vessel a plurality of windmill structures as defined in any of claims 1-12, connecting said plurality of windmill structures to an electrical power system of said vessel.

14. The method according to claim 13, wherein said electrical power system comprises a battery storage system.

15. The method according to claim 13 or 14, wherein said power is used at least partially as driving power for a propeller of the vessel.

## Patentansprüche

1. Windradstruktur, umfassend:
- mindestens ein Windradblatt (20), das auf einer stationären horizontal angeordneten Achse (15) angeordnet ist,
- einen länglichen Rahmen (10), wobei die Achse (15) des Windradblatts (20) zentral und entlang der Längsabmessung des Rahmens (10) angeordnet ist, wobei der Rahmen ein Windradhaus (25) definiert, das das mindestens eine Windradblatt (20) umgibt,
- wobei das Haus (25) mindestens zwei gegenüberliegend angeordnete Seitenöffnungen an den Längsseiten des Hauses aufweist, **dadurch gekennzeichnet, dass**
der längliche Rahmen die allgemeine Form eines rechteckigen Prismas mit Abmessungen aufweist, die im Wesentlichen einem Frachtcontainer für Containerschiffe entsprechen, und dass
- ein oder mehrere Zentrallager (17), die von einer zentral angeordneten Tragstruktur (16) gehalten sind, um einen zentralen Punkt der Achse (15) zu stützen.

2. Windradstruktur nach Anspruch 1, die eine Öffnung auf der Oberseite des Hauses (25) umfasst.

3. Windradstruktur nach Anspruch 1 oder 2, wobei mindestens eine der gegenüberliegenden Öffnungen an den Längsseiten verschließbar ist.

4. Windradstruktur nach einem der vorhergehenden Ansprüche, wobei die mindestens zwei entgegengesetzt angeordneten Öffnungen im Wesentlichen die gesamten jeweiligen Seiten des Windradhauses (25) bedecken.

5. Windradstruktur nach einem der vorhergehenden Ansprüche, wobei das mindestens eine Windradblatt (20) mindestens ein wendelförmiges Blatt umfasst.

6. Windradstruktur nach einem der Ansprüche 1 bis 4, wobei die Achse (15) mindestens ein Ende aufweist, das mit einem Generator (30) und/oder einem Bewegungsübertragungsmechanismus zum Verbinden mit einem Generator (30) verbindbar ist.

7. Windradstruktur nach einem der Ansprüche 1 bis 5, wobei die Achse (15) mit einem elektrischen Generator (30) verbunden ist, der Elektrizität aus der Drehung der Achse (15) erzeugt, wobei der elektrische Generator optional in einem distalen Abschnitt des Windradhauses (25) enthalten ist.

8. Windradstruktur nach Anspruch 7, wobei der elektrische Generator (30) ein Permanentmagnetgenerator ist.

9. Windradstruktur nach Anspruch 7 oder 8, wobei die Achse (15) über ein einstellbares Getriebe (40) mit dem elektrischen Generator verbunden ist.

10. Erste Windradstruktur nach einem der Ansprüche 6 bis 9, umfassend einen Bewegungsübertragungsmechanismus (31) zum Verbinden ihrer Achse (15) mit einem elektrischen Generator (30) einer benachbarten zweiten Windradstruktur oberhalb oder unterhalb.

11. Windradstruktur nach einem der Ansprüche 1-9, ferner umfassend ein Solarpanel (60), das auf der Oberseite des Rahmens (10) angeordnet ist.

12. Windradstruktur nach Anspruch 1, wobei das Windradblatt (20) mindestens ein Windradblatt vom Savonius-Typ umfasst.

13. Verfahren zum Bereitstellen von Strom für ein Schiff, umfassend das Anordnen einer Mehrzahl von Windradstrukturen, wie in einem der Ansprüche 1-12 definiert, auf dem Deck des Schiffes, wobei die Mehrzahl von Windradstrukturen mit einem elektrischen Energiesystem des Schiffes verbunden wird.

14. Verfahren nach Anspruch 13, wobei das elektrische Energiesystem ein Batteriespeichersystem umfasst.

15. Verfahren nach Anspruch 13 oder 14, wobei die Energie zumindest teilweise als Antriebsleistung für einen Propeller des Schiffes verwendet wird.

## Revendications

1. Structure d'éolienne comprenant
- au moins une pale d'éolienne (20) disposée sur un axe fixe (15) disposé horizontalement,
- un cadre allongé (10), l'axe (15) de la pale d'éolienne (20) étant disposé de manière centrale et suivant la dimension longue du cadre (10), le cadre définissant un logement d'éolienne (25) entourant ladite au moins une pale d'éolienne (20),
- ledit logement (25) présentant au moins deux ouvertures latérales disposées de manière opposée sur les côtés longs du logement, **caractérisée en ce que**
le cadre allongé présente la forme générale d'un prisme rectangulaire dont les dimensions correspondent sensiblement à celles d'un conteneur de marchandises pour navires porte-conteneurs, et **en ce que**
- un ou plusieurs paliers centraux (17) sont maintenus par un support (16) disposé de manière centrale pour supporter un point central de l'axe (15).

2. Structure d'éolienne selon la revendication 1, comprenant une ouverture sur le dessus dudit logement (25).

3. Structure de moulin à vent selon la revendication 1 ou 2, dans laquelle au moins l'une desdites ouvertures disposées de manière opposée sur les côtés longs peut être fermée.

4. Structure de moulin à vent selon l'une quelconque des revendications précédentes, dans laquelle lesdites au moins deux ouvertures disposées de manière opposée recouvrent sensiblement la totalité des côtés respectifs dudit logement d'éolienne (25).

5. Structure d'éolienne selon l'une quelconque des revendications précédentes, dans laquelle ladite au moins une pale d'éolienne (20) comprend au moins une pale de type hélicoïdal.

6. Structure d'éolienne selon l'une quelconque des revendications 1 à 4, dans laquelle ledit axe (15) a au moins une extrémité qui peut être connectée à un générateur (30) et/ou à un mécanisme de transfert de mouvement pour la connexion à un générateur (30).

7. Structure d'éolienne selon l'une quelconque des revendications 1 à 5, dans laquelle ledit axe (15) est connecté à un générateur électrique (30) qui génère de l'électricité à partir de la rotation de l'axe (15), ledit générateur électrique étant facultativement compris dans une section distale du logement d'éolienne (25).

8. Structure d'éolienne selon la revendication 7, dans laquelle ledit générateur électrique (30) est un générateur à aimant permanent.

9. Structure d'éolienne selon la revendication 7 ou 8, dans laquelle ledit axe (15) est connecté audit générateur électrique par le biais d'un mécanisme d'engrenage réglable (40).

10. Première structure d'éolienne selon l'une quelconque des revendications 6 à 9, comprenant un mécanisme de transfert de mouvement (31) pour connecter son axe (15) à un générateur électrique (30) d'une seconde structure d'éolienne adjacente au-dessus ou au-dessous.

11. Structure d'éolienne selon l'une quelconque des revendications 1 à 9, comprenant en outre un panneau solaire (60) disposé sur le dessus dudit cadre (10).

12. Structure d'éolienne selon la revendication 1, dans laquelle ladite pale d'éolienne (20) comprend au moins une pale d'éolienne de type Savonius.

13. Procédé de fourniture d'énergie à un navire comprenant l'agencement sur le pont dudit navire d'une pluralité de structures d'éoliennes telles que définies dans l'une quelconque des revendications 1 à 12, connectant ladite pluralité de structures d'éoliennes à un système d'alimentation électrique dudit navire.

14. Procédé selon la revendication 13, dans lequel ledit système d'alimentation électrique comprend un système de stockage de batterie.

15. Procédé selon la revendication 13 ou 14, dans lequel ladite énergie est utilisée au moins partiellement comme puissance motrice pour une hélice du navire.
